(19) Europäisches Patentamt
European Patent Office
Office européen des brevets

(11) EP 1 494 853 B1

(12) EUROPEAN PATENT SPECIFICATION

(45) Date of publication and mention of the grant of the patent:
**15.11.2006 Bulletin 2006/46**

(21) Application number: **03711571.4**

(22) Date of filing: **13.03.2003**

(51) Int Cl.:
***B32B 1/08*** (2006.01) ***B32B 27/28*** (2006.01)
***F16L 11/04*** (2006.01)

(86) International application number:
**PCT/US2003/007764**

(87) International publication number:
**WO 2003/089231 (30.10.2003 Gazette 2003/44)**

# (54) FLUOROPOLYMER-PERFLUOROPOLYMER LAMINATE

FLUOROPOLYMER-UND PERFLUOROPOLYMERVERBUNDSTOFF

STRATIFIE FLUOROPOLYMERE-PERFLUOROPOLYMERE

(84) Designated Contracting States:
**AT BE BG CH CY CZ DE DK EE ES FI FR GB GR HU IE IT LI LU MC NL PT RO SE SI SK TR**

(30) Priority: **18.04.2002 US 126125**

(43) Date of publication of application:
**12.01.2005 Bulletin 2005/02**

(73) Proprietor: **3M Innovative Properties Company**
**St. Paul, MN 55133-3427 (US)**

(72) Inventors:
- **FUKUSHI, Tatsuo**
  **Saint Paul, MN 55133-3427 (US)**
- **JING, Naijong**
  **Saint Paul, MN 55133-3427 (US)**
- **MOLNAR, Attila**
  **Saint Paul, MN 55133-3427 (US)**
- **BILBREY, David, B.**
  **Saint Paul, MN 55133-3427 (US)**
- **MUGGLI, Mark, W.**
  **Saint Paul, MN 55133-3427 (US)**

(74) Representative: **Vossius & Partner**
**Siebertstrasse 4**
**81675 München (DE)**

(56) References cited:
**EP-A- 0 962 311** **WO-A-02/16111**
**US-A- 5 320 888**

- **DATABASE WPI Section Ch, Week 198611 Derwent Publications Ltd., London, GB; Class A14, AN 1986-071983 XP002246367 & JP 61 021141 A (TORAY IND INC), 29 January 1986 (1986-01-29)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to a perfluoropolymer-fluoropolymer assembly useful in a layered sheet, a hose such as for conveying fuels or chemicals, and the like.

Fluoroplastics are used for their properties such as chemical resistance and low fuel permeation. Automotive applications, such as fuel hoses, demand lower and lower fuel permeation to minimize evaporative emissions and meet stronger environmental standards. Perfluoropolymers are becoming necessary to provide sufficiently low permeation in such applications. However, perfluoropolymers are expensive so thin layers are sought for use in combination with other materials, which provide resilience, strength, durability, and other desired properties in a composite. The very properties for which perfluoropolymers are sought, e.g., being chemically inert, make them difficult to bond. A variety of methods have been used to promote adhesion between fluoropolymers and non-fluoropolymers as well as between two fluoropolymers such as THV and FKM. These methods include treating the surface of one or both of the layers, using blends of two polymers such as a polyamide with a THV, mixing a polyamide and a grafted fluoropolymer having polar functionality, using tie layers, and using adhesives.

EP-A-0 962 311 discloses a rubber laminate, wherein a specific fluororubber containing rubber layer is adhered via vulcanization to a second rubber layer. WO 02/16111 relates to a method for enhancing the bond strength between a VDF-containing fluoroplastic layer and an elastomer layer, comprising the steps of thermally insulating the curable elastomer layer, heating the fluoroplastic layer and curing the curable elastomer layer. JP-A-61021141 discloses a molded fluororesin article, obtainable via plasma treatment of the surface of the fluororesin which leads to a surface modification and to an improvement of adhesive properties.

The present inventors have discovered a method of adhering a perfluoropolymer to another fluoropolymer even though both materials are known to be difficult to bond. No surface treatment, adhesive, tie layer, or the like is required.

Briefly, the present invention provides an article comprising a first layer consisting essentially of a substantially solid thermoplastic perhalogenated polymer and optionally one or more adjuvants, a second layer consisting essentially of a substantially solid thermoplastic partially-fluorinated polymer and optionally one or more adjuvants, and a bonding interface between said first layer and said second layer consisting essentially of a first material having the composition of said first layer and a second material having the composition of said second layer.

In another aspect, the present invention provides a sheet comprising a first layer comprising a thermoplastic perhalogenated polymer and optionally one or more adjuvants, a second layer comprising a thermoplastic partially-fluorinated polymer and optionally one or more adjuvants, and a bonding interface between said first layer and said second layer consisting essentially of a first material having the composition of said first layer and a second material having the composition of said second layer.

In another aspect, the present invention provides an article comprising a first layer consisting essentially of a substantially solid thermoplastic perhalogenated polymer and optionally one or more adjuvants, a second layer consisting essentially of a substantially solid thermoplastic partially-fluorinated polymer and optionally one or more adjuvants, and a bonding interface between said first layer and said second layer consisting essentially of a first material having the composition of said first layer and a second material having the composition of said second layer, including any adjuvants.

In yet another aspect, the present invention provides a process for preparing a layered article comprising providing a first layer consisting essentially of a substantially solid perhalogenated polymer and optionally one or more adjuvants, providing a second layer consisting essentially of a substantially solid partially-fluorinated polymer and optionally one or more adjuvants contacting a surface of the first layer, and heating at least one layer to a temperature above its softening point or melting point for a time sufficient to bond the layers, and optionally pressing said first layer to said second layer, wherein a bonding interface between said first layer and said second layer consists essentially of a first material having the composition of said first layer and a second material having the composition of said second layer.

In still another aspect, the present invention provides a method of making a layered article comprising preparing a two-layer subassembly consisting essentially of extruding a first layer consisting essentially of a perhalogenated polymer and optionally one or more adjuvants and extruding a second layer consisting essentially of a partially-fluorinated polymer and optionally one or more adjuvants contacting a surface of the first layer, wherein a bonding interface between said first layer and said second layer consists essentially of a first material having the composition of said first layer and a second material having the composition of said second layer.

In this document: "fluorinated thermoplastic" means having a distinct melting point, as distinguished from amorphous materials such as fluorinated elastomers that usually do not have such a melting point; "partially-fluorinated" means at least one-fourth of the hydrogen atoms bonded to carbon atoms are replaced with fluorine atoms; and "substantially solid" means less than 30% by volume of enclosed voids or gases such as would be prevalent in foamed constructions.

It is an advantage of the present invention to provide multilayer fluoropolymer articles having a perfluoropolymer layer and a fluoropolymer layer, such as sheets, tubing, hoses, and other shaped articles, without resorting to surface treating, adhesives, tie layers, polymer grafting, blending, and the like to reach sufficient bond strength.

Other features and advantages of the invention will be apparent from the following detailed description of the invention and the claims. The above summary is not intended to describe each illustrated embodiment or every implementation of the present disclosure. The following detailed description more particularly exemplifies certain preferred embodiments utilizing the principles disclosed herein.

The present invention provides a composite assembly of a layer of a perhalogenated polymer such as a perfluoropolymer bonded to a layer of a partially fluorinated polymer.

The first and second layers in the article of the invention are substantially solid, containing less than 30% of the volume of a layer comprised of enclosed voids or gases such as occurs in foamed constructions. In other embodiments, less than 20%, less than 10%, or even 0% of the volume of a layer comprises enclosed voids or gases.

The first layer of an article according to the present invention includes one or more thermoplastic perhalogenated polymers. These polymers typically have melting temperatures ranging from about 100 to about 330°C, more preferably from about 150 to about 310°C. The perhalogenated polymer typically comprises interpolymerized units of Formula I:

$$-CF(X)-CX_2-, \qquad (I)$$

wherein each X is independently a halogen atom or perhalogenated $C_1$-$C_8$ alkyl group, $R'_f$, or $O(R'_fO)_aR'_f$, wherein each $R'_f$ is independently a $C_1$-$C_8$ perfluoroalkyl group and a is 0-10. Useful examples include interpolymerized units such as tetrafluoroethylene (TFE) and chlorotrifluoroethylene (CTFE). In one embodiment, at least one perhalogenated polymer comprises at least 40 weight percent (wt%) of its interpolymerized units of Formula I. In another embodiment, at least one perhalogenated polymer comprises at-least 80 wt% of its interpolymerized units of Formula I. In another embodiment, at least one perhalogenated polymer comprises at least 95 wt% of its interpolymerized units of Formula I. The perhalogenated polymer may further include interpolymerized units derived from other perfluorinated monomers in various combinations.

The perhalogenated polymer also may comprise interpolymerized units of Formula II:

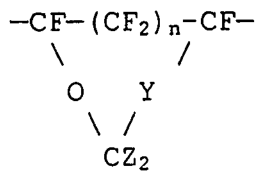

**(II)**

wherein each Y is independently a bond, Oxygen or $CF_2$; each Z is independently F or $R_f$ wherein each $R_f$ is independently a $C_1$-$C_{10}$ perfluoroalkyl group; and n is 0-3.

The perhalogenated polymer also may comprise interpolymerized units of Formula II.

The perhalogenated polymer also may comprise interpolymerized units of the formula-$CF_2$-$CF(X')$-, wherein each X' is independently Cl, Br, $R_f$, $O(R_fO)_aR_f$, wherein each $R_f$ is independently a $C_1$-$C_{10}$ perfluoroalkyl group and a is 0-10, or a unit according to Formula II (as described above).

The perhalogenated polymer also may comprise interpolymerized units of formula-$CF_2$-O-Y-$CF_2$-, wherein Y is a bond or $CF_2$.

The perhalogenated polymer also may comprise interpolymerized units of a perfluorinated vinyl ether of Formula IV:

$$CF_2=CFO(R_fO)_aR_f \qquad (III)$$

wherein each $R_f$ is independently a linear or branched $C_1$-$C_6$ perfluoroalkyl group; and a is 0 or an integer from 1 to 20.

Specific examples of suitable perfluorinated monomers include hexafluoropropylene (HFP), 3-chloropentafluoropropene, and perfluorinated vinyl ethers such as $CF_2=CFOCF_3$, $CF_2=CFOCF_2CF_2OCF_3$, $CF_2=CFOCF_2CF_2CF_2OCF_3$, $CF_2=CFOCF_2CF_2CF_3$, $CF_2=CFOCF_2CF(CF_3)OCF_2CF_2CF_3$, and $CF_2=CFOCF_2CF(CF_3)OCF_2CF(CF_3)OCF_2CF_2CF_3$,

Among the preferred perfluorinated polymers useful for the first layer of the invention are: FEP, PFA, PCTFE, TFM™ modified PTFE from Dyneon LLC, MFA, and Teflon AF.

The second layer of an article according to the present invention includes one or more thermoplastic partially-fluorinated polymers, which may be linear, branched, and/or grafted.

The fluoroplastic useful in the second layer typically includes interpolymerized units derived from tetrafluoroethylene (TFE), hexafluoropropylene (HFP), chlorotrifluoroethylene (CTFE), vinyl fluoride (VF), vinylidene fluoride (VDF), and may further include interpolymerized units derived from other fluorine-containing monomers, non-fluorine-containing monomers, or a combination thereof. Other examples of suitable fluorine-containing monomers include 3-chloropentafluoropropene, the perfluorinated alkyl- or alkoxy- vinyl ethers described above and their partially-fluorinated analogs, and fluorine-containing olefin monomers. Examples of suitable non-fluorine-containing monomers include olefin monomers such as ethylene, propylene, and the like.

The partially fluorinated polymer also may comprise interpolymerized units of Formula IV:

$$-CF(X')-CX'_2-, \qquad (IV)$$

wherein each X' is independently hydrogen, a halogen atom, a $C_1$-$C_{10}$ alkyl group, $R'_f$, or $O(R'_fO)_aR'_f$, wherein each $R'_f$ is independently a $C_1$-$C_{10}$ fluoroalkyl group and a is 0-10. The fluoroalkyl or perfluoroalkyl groups described here and in reference to Formula III may be linear or branched. Longer groups are preferred in some embodiments to provide lower surface energy.

In one aspect, at least one layer comprises interpolymerized units of a hydrogencontaining monomer having a pH at or below the pH of vinylidene fluoride.

Partially fluorinated polymers of VDF, HFP and TFE are known to be readily dehydrofluorinated by bases in the presence of a phase transfer catalyst. This is thought to occur because the methylene groups of VDF are surrounded by fluorocarbons (resulting from an interpolymerized vinylidene fluoride monomer), which are known to be electron-withdrawing groups. As a result, the hydrogen of the methylene units become more acidic and are susceptible to base attack to undergo dehydrofluorination. The newly formed carbon-carbon double bonds enable bonding to organic and inorganic substrates having nucleophilic functionalities. Monomers useful in polymers of the invention which are similar to VDF in this respect include $CFH=CF_2$, $CH_2=CHF$, $CH_2=CHR_f$, perfluoroaryl vinyl ether, $CF2=CHR_f$, wherein $R_f$ is a $C_1$-$C_{10}$ perfluoroalkyl group.

Among the preferred partially fluorinated polymers useful for the second layer of the invention are copolymers of TFE, HFP, and VDF, and optionally including a fluorinated vinyl ether.

Any known fluoroelastomer or perhalogenated elastomer can be used when the material meets the definition required for the inventive composition.

The article of the invention also includes a bonding interface between the first layer and the second layer of the invention. This interface consists essentially of a first material having the composition of the first layer and a second material having the composition of the second layer. Such first and second layer compositions may include known adjuvants such as antioxidants, conductive materials, carbon black, graphite, fillers, lubricants, pigments, plasticizers, processing aids, stabilizers, and the like including combinations of such materials, which do not materially improve the bonding properties between these two layers. Thus, no etching, corona discharge, adhesion promoter, or other surface treatment that adds one or more chemical species or removes one or more fluorine or other atoms or otherwise modifies the composition of either layer is used in the bonding interface between the first layer and the second layer of the invention. Similarly, the first and second layers of the article of the invention do not include various other elements known to improve adhesion between a fluoropolymer and another material, such as a tie layer and/or adhesive. That is, the bonding interface between the first and second layer consists essentially of the materials of the first and second layer.

The absence of a surface treatment intended to improve bonding can be noted by the critical surface tension or surface energy of the layers in the invention. For example, the perhalogenated polymer layer of one embodiment of the invention has a first surface bonded to the second layer, wherein this first surface has a surface energy below about 30 $mJ/m^2$, more preferably below about 25 or even below about 22 $mJ/m^2$. Similarly, the partially fluorinated layer of one embodiment of the invention has a surface bonded to the first layer, wherein this bonding surface has a surface energy below about 30 $mJ/m^2$, more preferably below about 25 or even below about 22 $mJ/m^2$.

The bonding interface between the first and second layers provides an interlayer adhesion level at least about one Newton per centimeter (N/cm), as measured by a peel test according to ASTM D 1876. The interlayer adhesion of the present invention is preferably at least about 2 N/cm, and more preferably at least about 5 N/cm. In some embodiments of the present invention, the interlayer adhesion above about 15 N/cm, above about 30 N/cm, or even about 45 N/cm.

The thermoplastic polymer of either the first or second layer, or both, may include a conductive material to provide an electrostatic dissipative (ESD) fluoroplastic composition. In this aspect of the invention, the ESD polymer composition comprises a sufficient amount of one or both layers to provide ESD properties to the resultant article. Usually, up to about 20 wt% of the conductive material is sufficient. In addition, a minor amount, usually up to about 5 wt%, of another melt processable thermoplastic material such as a hydrocarbon polymer is used as a dispersing aid. The dispersing aid does not provide measurable improvement in bonding between the first and second layers. The ESD polymer composition preferably contains about 2 to about. 10 wt% of the conductive material and about 0.1 to about 3 wt% of the dispersing aid. Any known conductive filler may be used, such as carbon black and/or graphite. Likewise, any known dispersing aid may be used, such as any of a variety of hydrocarbon polymers. In an aspect of the invention involving a multilayer hose such as for conveying volatile fuel, the ESD composition is preferably included in the interior layer of the hose that is in contact with the fuel. The dispersing aid is preferably fluid at the processing temperature of the layer in which it is used. Additionally, the dispersing aid preferably is immiscible with the polymer of that layer. Typical

ESD additive compositions include the hydrocarbon olefin polymers and the poly(oxyalkylene) polymers with the conductive materials such as taught in U.S. Pat. No. 5,549,948.

In another embodiment, the invention includes one or more additional layer(s). In one aspect, this involves a third layer comprising a polymer, the third layer being bonded to the second layer on a surface opposite that to which the first layer is bonded. A third layer comprising a polymer may be bonded to the first layer on a surface opposite that to which the second layer is bonded. In addition, a fourth layer comprising a polymer can be bonded to an exposed surface of a multilayer article of the invention. For example, when a third layer is bonded to the second layer, a fourth layer can be bonded to the third layer or the first layer. Other combinations will be apparent to those skilled in the art and are included within the scope of this invention. The composition of the one or more additional layer(s) may comprise any polymer described above and optionally any known adjuvant.

In addition, other known polymers may be bonded to the surfaces of the first and/or second layer that are not involved in the bonding interface, as well as to third and/or fourth layers such as described above. These other polymers include the fluorinated and perfluorinated polymers described above as well as non-fluorinated polymers such as polyamides, polyimides, polyurethanes, polyolefins, polystyrenes, polyesters, polycarbonates, polyketones, polyureas, polyacrylates, and polymethylmethacrylates.

In other embodiments of the invention, adhesion between the multilayer fluoropolymer article of the invention and another material can be improved through any known means. Such routes include, e.g., surface treatments, dehydrofluorinating agents, tie layers, adhesives, and the like.

In another embodiment, the invention includes one or more additional layer(s). In one aspect, this involves a third layer comprising a polymer, the third layer being bonded to the second layer on a surface opposite that to which the first layer is bonded. A third layer comprising a polymer may be bonded to the first layer on a surface opposite that to which the second layer is bonded. In addition, a fourth layer comprising a polymer can be bonded to an exposed surface of a multilayer article of the invention. For example, when a third layer is bonded to the second layer, a fourth layer can be bonded to the third layer or the first layer. Other combinations will be apparent to those skilled in the art and are included within the scope of this invention. The composition of the one or more additional layer(s) may comprise any polymer described above and optionally any known adjuvant.

In addition, other known polymers may be bonded to the surfaces of the first and/or second layer that are not involved in the bonding interface, as well as to third and/or fourth layers such as described above. These other polymers include the fluorinated and perfluorinated polymers described above as well as non-fluorinated polymers such as polyamides, polyimides, polyurethanes, polyolefins, polystyrenes, polyesters, polycarbonates, polyketones, polyureas, polyacrylates, polymethacrylates, acrylonitrile butadiene, butadiene rubber, chlorinated and chloro-sulfonated polyethylene, chloroprene, EPM, EPDM, PE-EPDM, PP-EPDM, EVOH, epichlorihydrin, isobutylene isoprene, isoprene, polysulfides, silicones, NBR/PVC, styrene butadienes, and vinyl acetate ethylenes, and combinations thereof.

In one embodiment, the multilayer article of the invention is used in solar cell applications. In this embodiment, a film comprising the inventive article is used alone or in combination with one or more additional layers, for example, as a barrier film resistant to oxygen and water or as a top layer. In such solar cell applications, another layer optionally comprises a non-fluorinated polymer. The non-fluorinated polymer is selected from polyesters, polyacrylates, polymethacrylates, polyolefins.

In one embodiment, the present invention provides a process for preparing a layered article comprising providing a first layer consisting essentially of a perhalogenated polymer and optionally one or more adjuvants, providing a second layer consisting essentially of a partially-fluorinated polymer and optionally one or more adjuvants on a surface of the first layer, and heating at least one layer to a temperature above its melting point or softening point for a time sufficient to bond the layers, wherein a bonding interface between said first layer and said second layer consists essentially of a first material having the composition of said first layer and a second material having the composition of said second layer. In a preferred version of this embodiment, the layers are bonded through the application of heat and pressure to surfaces opposite the bonding interface. In another preferred version of this embodiment, the layers are bonded through providing one layer in film form and providing the next layer in a fluid state upon the surface of the film.

One process for preparing a multi-layer article of the present invention involves providing a first layer comprising a fluoropolymer as described above, providing a second layer bonded to the first layer, the second layer comprising a fluoropolymer as described above, and heating at least one layer and the interface between the layers to a temperature above the softening point or melting point of at least one of the layers. Generally, the highest melting or softening point of all components used in a blend of the invention defines the preferred minimum temperature for preparing the multilayer article. For example, when a perfluorothermoplastic is used in a blend, this layer is preferably heated to the melting point of the perfluorothermoplastic or above, and when a perfluoroelastomer is used in a blend layer, this layer is preferably heated to the softening point or the melt processing range of the perfluoroelastomer or above. In addition, the layers are preferably pressed together, such as through a nip or platen or other known means. Generally, increasing the time, temperature, and/or pressure can improve interlayer adhesion. The conditions for bonding any two layers can be optimized through routine experimentation.

Another process for preparing a multi-layer article of the present invention involves coextruding two or more layers through a die to form an article. Such coextrusion processes are useful, e.g., for preparing sheets, tubing, containers, etc.

Still another process for preparing a multi-layer article featuring a fluoropolymer blend layer of the present invention involves extruding one layer through a die to form a length of tubing. A second extruder supplies a crosshead die to coat another layer of molten fluoropolymer onto a surface of the tubing. The blend of the invention can be provided in either the inner or outer layer, or both. Additional layers can be added through similar means. Following the extrusion operations, the multi-layer article may be cooled, e.g., by immersion in a cooling bath. This process can be used to form multilayer sheets of the invention, as well as other shapes, by using extrusion die shapes known in the art. The blend of the invention can be provided to the extrusion process through any known means. For example, dry input materials can be blended before being supplied to an extruder, or a twin screw extruder may be used to blend materials during melt processing.

Multi-layer articles prepared according to the invention can be provided in a wide variety of shapes, including sheets, films, containers, hoses, tubes, and the like. The articles are especially useful wherever chemical resistance and/or barrier properties are desired. Examples of specific uses for the articles include their use in retroreflective sheets, paint replacement films, drag reduction films, fuel line and filler neck hoses, fuel tanks, exhaust hoses, and the like. The articles are also useful in chemical handling and processing applications, and as wire and cable coatings.

Objects and advantage of this invention are further illustrated by the following examples, but the particular materials and amounts thereof recited in these examples, as well as other conditions and details, should not be construed to unduly limit this invention.

## Examples

### Test Methods

### Contact Angles and Surface Tension

Contact angles were measured using a VCA-2500XE (available from AST Products, Billerica, MA). Ionized water and *n*-hexadecane were used for contact angle measurements on fluoropolymer films described below. An average of measurements made on 3 to 6 different drops of water or hexadecane was used for the contact angle. Surface tension or surface energy of a solid ($\gamma_S$) was calculated using the following equations given by Owens and Wendt (D. K. Owens and R. C. Wendt, *J. Appl. Polym. Sci.* **13,** 1741 (**1969**)) using the polar component of surface energy ($\gamma_S{}^p$) and the dispersion component of surface energy ($\gamma_S{}^d$).

$$(1+\cos\theta)\gamma_{L1}{}^{d} = 2\sqrt{\gamma_{L1}{}^{d}} \times \sqrt{\gamma_{S}{}^{d}} + 2\sqrt{\gamma_{L1}{}^{P}} \times \sqrt{\gamma_{S}{}^{P}} \qquad \text{Equation 1}$$

$$(1+\cos\theta)\gamma_{L2}{}^{d} = 2\sqrt{\gamma_{L2}{}^{d}} \times \sqrt{\gamma_{S}{}^{d}} + 2\sqrt{\gamma_{L2}{}^{P}} \times \sqrt{\gamma_{S}{}^{P}} \qquad \text{Equation 2}$$

wherein $\theta$ is the contact angle, $\gamma_L$ is liquid surface tension, $\gamma_S$ is the solid surface tension and the subscripts and 2 refer to water and n-hexadecane, respectively, The addition of d and p in the superscripts refers to the dispersion and polar components of each. The known $\gamma_L{}^d$ and $\gamma_L{}^P$ of each testing liquid at 20°C, i.e., water $\gamma_L{}^d$ = 18.7 and $\gamma_L{}^P$ = 53.6 and for n-hexadecane $\gamma_L{}^d$ = 27.0 and $\gamma_L{}^P$ = 0, were used for the calculations. When the contact angles are measured, Equation 1 and 2 were be solved simultaneously to give $\gamma_S{}^d$ and $\gamma_S{}^p$ of the solid. The surface tension ($\gamma_S$) was defined as the sum of the $\gamma_S{}^d$ and $\gamma_S{}^p$ of the solid. Reported values were the average of the surface tension calculated from the contact angles.

### Peel Adhesion

Peel strength between the layers was measured in accordance with ASTM D 1876 (T-Peel Test). To facilitate testing of the adhesion between the layers via a T-peel test, a sheet of 0.05 mm thick polyimide film (available as Apical from Kaneka High-Tech Materials, Inc., Pasadena TX) was inserted about 2.54 cm between the films along one edge of the laminate sample before pressing. The polyimide sheet peeled away from each material and was used only to create tabs of the resulting laminate, which were inserted into the jaws of a test device. Samples were cut into strips 25.4 mm wide by about 2 to 2.5 in. (5 to 6.3 cm) long.

A Model 1125 tester (available from Instron Corp., Canton MA) at 4 in./min. (100 mm/min.) crosshead speed

was used as the test device. As the layers were separated, the average peel strength of the middle 80% of the sample was measured. The values from the first 10% and the last 10% distance of the crosshead were omitted. When the samples broke within the material without separating the layers at the bonding interface, the peak value was used instead of the average number. The values reported in the tables below were averages of three tested samples.

**Materials**

In the following materials, copolymer ratios are provided in weight percent. MFI was measured at a temperature of 265°C (for Partially Fluorinated materials) and 372°C (Perfluoropolymers) using a 5 kg weight.

| Perfluoropolymer | Composition and Characteristics |
|---|---|
| FEP-1 | 87.0 TFE and 13.0 HFP, Tm 260°C, MFI 7. |
| FEP-2 | 85.0 TFE and 15.0 HFP, Tm 255°C, MFI 22. |
| FEP-3 | 87.0 TFE and 13.0 HFP, Tm 260°C, MFI 3. |
| PFA-1 | 92.5 TFE, 2.0 HFP, and 5.5 PPVE, Tm 290°C, MFI 15. |
| PFA-2 | 96.2 TFE and 3.8 PPVE, Tm 310°C, MFI 2. |
| PFA-3 | 93.0 TFE, 4.0 HFP, and 3.0 PPVE, Tm 290°C, MFI 15. |

| | Partially Fluorinated Polymers: |
|---|---|
| A | 73.0 TFE, 11.5 HFP, 11.5 VDF, and 4.0 PPVE, Tm 222°C |
| B | 72.8 TFE, 10.4 HFP, 12.4 VDF, and 4.0 PPVE, Tm 230°C |
| C | 76.0 TFE, 12.0 HFP, and 12.0 VDF, Tm 237°C |
| D | 74.5 TFE, 11.8 HFP, 11.8 VDF, and 4.0 PPVE, Tm 225°C |
| E | 62.2 TFE, 22.0 HFP, and 15.8 VDF, Tm 203°C |
| F | 59.9 TFE, 21.5 HFP, and 18.6 VDF, Tm 185°C |
| G | 60.0 TFE, 18.0 HFP, and 22.0 VDF, Tm 165°C |
| H | 64.0 TFE, 20.0 HFP, and 16.0 Ethylene, Tm 205°C |
| J | 56.0 TFE, 18.0 HFP, and 26.0 VDF, Tm 155°C |

In the following Examples and Comparative Examples various samples were prepared and various properties were evaluated. All concentrations and percentages are by weight unless otherwise indicated.

**Example 1**

A 4 inch by 4 inch (10 cm by 10 cm) sheet of 0.5 mm film of FEP-1 was applied onto 0.5 mm film of Partially Fluorinated Polymer A. Then the laminated sheet was heated under pressure at 288°C (550°F) for 3 minutes to evaluate the adhesion between FEP-1 and Partially Fluorinated Polymer A, using a Wabash heated platen press (available from Wabash Hydraulic Press Co. A 15.2 cm by 15.2 cm shim stock having a 0.75 mm thickness was used to preserve the laminate thickness during the heat pressing. The sample was removed from the press and allowed to cool to room temperature. Peel adhesion strength was measured on the three strips and the average was reported in the table below.

**Examples 2-6**

In Examples 2 and 3, the samples were prepared and tested as in Example I except that the Partially Fluorinated Polymers B-F were used respectively instead of Partially Fluorinated Polymer A. The test results are summarized in the table below.

**Comparative Examples C1-C3**

In Comparative Examples C1-C3, samples were prepared and tested as in Example 1 except that the Partially Fluorinated Polymers G, H and J were used instead of Partially Fluorinated Polymer A. The test results are summarized in the table below.

**Examples 7-11**

In Examples 7-11, samples were prepared and tested as in Example 1 except that the heating pressure and heating time were varied as shown with the results in the table below.

**Examples 12**

In Example 12, a sample was prepared and tested as in Comparative Example C1 except that the heat press condition was at 300°C for 7.5 min. The results are summarized in the table below.

**Examples 13 and 14**

In Examples 13 and 14, samples were prepared and tested as in Example 1 except that FEP-2 and FEP-3 were used instead of FEP-1. The results are summarized in the table below.

**Examples 15-17**

In Examples 15-17, samples were prepared and tested as in Example 1 except that the heat press temperature was at 326.7°C and PFA-1, PFA-2 and PFA-3 were used respectively instead of FEP-1. The test results are summarized in the table below.

**Examples 18-23 and Comparative Example C4**

In Examples 18-23 and Comparative Example C4, samples were prepared and tested as in Example 15 except that the different heat press times and materials were used. The materials, conditions, and results are summarized in the table below.

**Examples 24**

In Example 24, the sample was prepared and tested as Example 1 except that a 1.0 mm thick fluoroelastomer (monomer composition: TFE/ VDF/ $CF_2$=$CFOCF_2)_3OCF_3$/ $CF_2$=CFBr (14.3/ 30/ 55./0.7 by weight) sheet was used as a Patially Fluorinated Polymer. Peel adhesion is provided in the table below.

**Example 25**

In Example 25, Fluoroelastomer (FKM) Compound was prepared using a two roll mill by compounding 100 parts per hundred parts rubber (phr) Dyneon™ FLS-2650 fluoroelastomer (available from Dyneon LLC) with 30 phr N-990 carbon black (available from Cancarb), 3 phr calcium hydroxide, 2.5 phr of a peroxide (Varox® DBPH-50 from R.T. Vanderbilt), and 2.5 phr triallyl isocyanurate (TAIC from Nippon Kasei). A 10 cm by 10 cm sheet about 1.5 mm thick of FKM was made by adjusting the gap of the roll mill.

Bromine containing tetrafluoroethylene-perfluoropropyl vinylether copolymer (BrPFA) was made by copolymerizing I-bromotrifluoroethylene (BrTFE) with tetrafluoroethylene (TFE) and perfluoropropyl vinylether (PPVE). The monomer ratio was BrTFE/ TFE/ PPVE=0.3: 95.8: 3.9 wt% and the bromine content was 0.145 wt% by X-ray fluorescence (XRF) analysis using Rigaku 3370 XRF spectrometer. A fine powder of BrPFA was coated onto above FKM Compound sheet. The coated sheet was heated under a platen press at a pressure of 35 kPa at 160°C for 10 min. A 15.2 cm by 15.2 cm shim stock with 1.25 mm thickness was used to keep the thickness of the laminate under the heat press. The sample was removed from the press and allowed to cool to room temperature. Then a 4 in. by 4 in. (10 cm by 10 cm) sheet of 0.1 mm thick film of a TFE/ PPVE copolymer (available as PFA 6522 from Dyneon LLC) was applied onto the bromine containing PFA-coated FKM Compound sheet. Then the laminated sheet was heated under platen pressure of 35 kPa at 327°C for 5 minutes to evaluate the adhesion between the PFA and the FKM Compound. The sample was removed from the press and allowed to cool to room temperature. The resulting sample was cut into three 25.4 mm wide strips. Peel Adhesion was measured on the three strips as described above. with ASTM D 1876 (T-peel test). The test result is summarized in in the tables below.

**Example 27-31**

In Example 27, a co-extrusion cross-head die equipped with two plastic extruders was used to extrude Partially Fluorinated Polymer A (inside) and a perfluoroplastic FEP-1 (outside). The co-extruded tube was drawn down to about

24.5 diameter tube before it was cooled. A cut was made to separate a 25.4 mm wide strip of the FEP-1 layer from Partially Fluorinated Polymer A in order to provide tabs to test the adhesion between the layers via a peel test. The thickness of the FEP layer was 0.3 mm. Peel adhesion strength was measured on the two strips and the average was reported in the table below. Examples 28-31 were prepared as described with Example 27 with the materials varying as shown in Table 4, below. The test results are summarized in the tables below.

**Table 1: Surface Tension**

| Polymer | Surface tension $\gamma^s$ (mN/m) | Polymer | Surface tension $\gamma^s$ (mN/m) |
|---|---|---|---|
| FEP-1 | 17.6 | A | 19.6 |
| FEP-2 | 17.4 | B | 19.6 |
| FEP-3 | 18.6 | C | 20.2 |
| PFA-1 | 16.7 | D | 20.3 |
| PFA-2 | 17.9 | E | 20.7 |
| PFA-3 | 18.7 | F | 20.8 |
| | | G | 21.7 |
| | | H | 22.7 |
| | | J | 22.8 |

**Table 2: Adhesion Results**

| Example | Press Temp. (C) | Press Time (min.) | Layer 1 | Layer 2 | Peel Adhesion (N/cm) |
|---|---|---|---|---|---|
| 1 | 288 | 3 | FEP-1 | A | 41.3 |
| 2 | 288 | 3 | FEP-1 | B | 5.0 |
| 3 | 288 | 3 | FEP-1 | C | 7.6 |
| 4 | 288 | 3 | FEP-1 | D | 19.3 |
| 5 | 288 | 3 | FEP-1 | E | 5.5 |
| 6 | 288 | 3 | FEP-1 | F | 5.7 |
| C1 | 288 | 3 | FEP-1 | G | <0.1 |
| C2 | 288 | 3 | FEP-1 | H | <0.1 |
| C3 | 288 | 3 | FEP-1 | J | <0.1 |
| 7 | 288 | 1 | FEP-1 | A | 32.4 |
| 8 | 275 | 1 | FEP-1 | A | 10.0 |
| 9 | 275 | 3 | FEP-1 | A | 14.4 |
| 10 | 275 | 5 | FEP-1 | A | 45.9 |
| 11 | 300 | 3 | FEP-1 | A | 52.1 |
| 12 | 300 | 7.5 | FEP-1 | G | 3.0 |
| 13 | 288 | 3 | FEP-2 | A | 44.3 |
| 14 | 288 | 3 | FEP-3 | A | 50.2 |

**Table 3: Adhesion Results**

| Example | Press Temp. (C) | Press Time (min.) | Layer 1 | Layer 2 | Peel Adhesion (N/cm) |
|---|---|---|---|---|---|
| 15 | 326.7 | 3 | PFA-1 | A | 34.4 |

(continued)

| Example | Press Temp. (C) | Press Time (min.) | Layer 1 | Layer 2 | Peel Adhesion (N/cm) |
|---|---|---|---|---|---|
| 1.6 | 326.7 | 3 | PFA-2 | A | 3.0 |
| 17 | 326.7 | 3 | PFA-3 | A | 20.8 |
| 18 | 326.7 | 5 | PFA-1 | A | 23.9 |
| 19 | 326.7 | 5 | PFA-2 | B | 1.4 |
| 20 | 326.7 | 15 | PFA-1 | B | 1.9 |
| 21 | 326.7 | 3 | PFA-1 | C | 4.1 |
| 22 | 326.7 | 15 | PFA-2 | C | 6.5 |
| 23 | 326.7 | 15 | PFA-2 | C | 3.0 |
| C4 | 326.7 | 5 | PFA-1 | G | < 0.1 |
| 24 | 288 | 3 | FEP-1 | FKM | 13.8 |
| 25 | 326.7 | 5 | BrPFA | FKM | 12.1 |
| 26 | 326.7 | 5 | PFA-4 | FKM | 4.5 |

**Table 4: Adhesion Results**

| Example | Layer 1 | Layer 2 | Peel Adhesion (N/cm) |
|---|---|---|---|
| 27 | FEP-1 | A | 17.4 |
| 28 | FEP-1 | B | 11.2 |
| 29 | FEP-1 | C | 4.2 |
| 30 | FEP-1 | F | 12.7 |
| 31 | FEP-1 | G | 17.4 |

Various modifications and alterations of this invention will become apparent to those skilled in the art without departing from the scope and principles of this invention, and it should be understood that this invention is not to be unduly limited to the illustrative embodiments set forth hereinabove.

## Claims

1. An article comprising:

   a first layer consisting essentially of a substantially solid thermoplastic perhalogenated, optionally perfluorinated, polymer and optionally one or more adjuvants,
   a second layer consisting essentially of a substantially solid thermoplastic partially-fluorinated polymer and optionally one or more adjuvants; and
   a bonding interface between said first layer and said second layer consisting essentially of a first material having the composition of said first layer and a second material having the composition of said second layer.

2. The article of claim 1, wherein the first and second layers have an interlayer adhesion level at least about one Newton per centimeter (N/cm), optionally at least about 2 N/cm, and optionally at least about 5 N/cm

3. The article of claim 1, wherein the perhalogenated polymer has a first surface bonded to the second layer, wherein said first surface has a surface energy below about 25 $mJ/m^2$.

4. The article of claim 1, wherein the perhalogenated polymer comprises interpolymerized units of Formula I:

$-CF(X)-CX_2-$, (I)

wherein each X is independently a halogen atom, a perhalogenated $C_1$-$C_8$ alkyl group, $R'_f$, or $O(R'_fO)_aR'_f$, wherein each $R'_f$ is independently a $C_1$-$C_8$ perfluoroalkyl group and a is 0-10.

**5.** The article of claim 4, wherein at least one perhalogenated polymer comprises a level of weight percent of its interpolymerized units of Formula I selected from at least 40, at least 80, and at least 95.

**6.** The article of claim 1, wherein the perhalogenated polymer comprises a perfluorinated polymer having interpolymerized units according to Formula II:

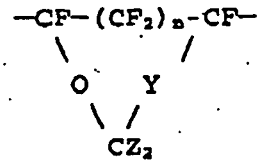

(II)

wherein each Y is independently a bond, O, or $CF_2$; each Z is independently F or $R_f$ wherein each $R_f$ is independently a $C_1$-$C_{10}$ perfluoroalkyl group; and n is 0-3.

**7.** The article of claim 1, wherein the perhalogenated polymer comprises interpolymerized units according to the formula $-CF_2-CF(X')-$,
wherein each X' is independently Cl, Br, $R_f$, $O(R_fO)_aR_f$, wherein each $R_f$ is independently a $C_1$-$C_{10}$ perfluoroalkyl group and a is 0-10, or a unit according to Formula II:

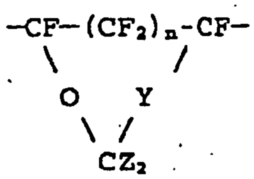

(II)

wherein each Y is independently a bond, O, or $CF_2$; each Z is independently F or $R_f$ wherein each $R_f$ is independently a $C_1$-$C_{10}$ perfluoroalkyl group; and n is 0-3.

**8.** The article of claim 6, wherein the perhalogenated polymer comprises interpolymerized units according to the formula $-CF_2-O-Y-CF_2-$, wherein Y is a bond or $CF_2$.

**9.** The article of claim 1, wherein the perhalogenated polymer comprises a copolymer of tetrafluoroethylene (TFE) with at least one of: hexafluoropropylene (HFP), chlorotrifluoroethylene (CTFE), and a perfluorinated vinyl ether of Formula III:

$CF_2=CFO(R_fO)_aR_f$ (III)

wherein each $R_f$ is independently a linear or branched $C_1$-$C_6$ perfluoroalkyl group; and a is O or an integer from 1 to 20.

**10.** The article of claim 1, wherein the perhalogenated polymer comprises a polymer selected from FEP, PFA, PCTFE, TFM, MFA, and Teflon AF.

**11.** The article of claim 1, wherein the second layer comprises a partially fluorinated polymer having interpolymerized units of Formula IV:

$-CF(X')-CX'_2-$, (IV)

wherein each X' is independently hydrogen, a halogen atom, a $C_1$-$C_{10}$ alkyl group, $R'_f$, or $O(R'_fO)_aR'_f$, wherein each

$R'_f$ is independently a $C_1$-$C_{10}$ fluoroalkyl group and a is 0-10.

**12.** The article of claim 1, wherein the second layer comprises vinyl fluoride, vinylidene fluoride, tetrafluoroethylene, hexafluoropropylene, a fluorinated alkoxy vinyl ether, a fluorinated alkyl vinyl ether, and combinations thereof.

**13.** The article of claim 1, wherein the second layer comprises interpolymerized units of vinyl fluoride and/or vinylidene fluoride along with interpolymerized units of a vinyl ether, HFP, and/or TFE.

**14.** The article of claim 1, wherein the second layer comprises interpolymerized units of VDF, HFP, and TFE, and optionally a fluorinated vinyl ether.

**15.** The article of claim 1, further comprising a third layer, and optionally a fourth layer bonded to the third layer, wherein the third layer is bonded to the first or second layer, and optionally wherein one or more layers includes a conductive adjuvant.

**16.** The article of claim 15, wherein the third layer and/or fourth layer comprises a polymer selected from: perhalogenated polymers, perfluoropolymers, partially-fluorinated polymers, and non-fluorinated polymers, and combinations thereof.

**17.** A sheet comprising:

a first layer comprising a perhalogenated thermoplastic polymer and optionally one or more adjuvants;
a second layer comprising a partially-fluonnated thermoplastic polymer and optionally one or more adjuvants; and
a bonding interface between said first layer and said second layer consisting essentially of a first material having the composition of said first layer and a second material having the composition of said second layer.

**18.** The sheet of claim 17 wherein the perhalogenated polymer is derived from interpolymerized units of TFE, HFP, CTFE, and optionally a perfluorinated vinyl ether.

**19.** The sheet of claim 17 wherein the partially-fluorinated polymer is derived from interpolymerized units of one or more of: vinyl fluoride, VDF, TFR, HFP, CTFE, a fluorinated alkoxy vinyl ether, and a fluorinated alkyl vinyl ether.

**20.** A solar cell comprising a film comprising the article of any of the preceding claims, and optionally, further comprising another layer which may comprise a non-fluorinated polymer, optionally wherein the non-fluorinated polymer is selected from polyesters, polyacrylates, polymethacrylates, polyolefins.

**21.** A fuel hose comprising the article of any of claims 1-15.

**22.** The fuel hose of claim 21, further comprising an outer layer, said outer layer optionally comprising a non-fluorinated polymer.

**23.** The fuel hose of claim 22, further comprising:

an intermediate layer comprising a partially-fluorinated thermoplastic polymer bonded to the first layer of the article;
an inner layer bonded to the second layer of the article, the inner layer optionally comprising a partially-fluorinated elastomer; and
wherein one or more layers includes a conductive material.

**24.** The fuel hose of claim 22, wherein the outer layer comprises a material selected from polyamides, polyimides, polyurethanes, polyolefins, polystyrenes, polyesters, polycarbonates, polyketones, polyureas, polyacrylates, polymethacrylates, acrylonitrile butadiene, butadiene rubber, chlorinated and chloro-sulfonated polyethylene, chloroprene, EPM, EPDM, PE-EPDM, PP-EPDM, EVOH, epichlorohydrin, isobutylene isoprene, isoprene, polysulfides, silicones, NBR/PVC, styrene butadienes, and vinyl acetate ethylenes, and combinations thereof.

**25.** A process for preparing a layered article comprising:

a) providing a first layer and a second layer according to any of claims 1-15;

b) heating at least one layer to a temperature above its softening point or melting point for a time sufficient to bond the layers; and
c) optionally pressing said first layer to said second layer, and

wherein a bonding interface between said first layer and said second layer consists essentially of a first material having the composition of said first layer and a second material having the composition of said second layer.

**26.** A method of making a layered article comprising preparing a two-layer subassembly consisting essentially of:

a) extruding a first layer according to any of claims 1-15; and
b) extruding a second layer according to any of claims 1-15 and contacting a surface of the first layer,

wherein a bonding interface between said first layer and said second layer consists essentially of a first material having the composition of said first layer and a second material having the composition of said second layer, optionally wherein said first layer and said second layer are bonded while at least one layer is above its melting point or softening point,
and optionally wherein one or more layers further comprises a conductive material.

**27.** The process of claim 26 wherein said first layer and said second layer are extruded into a tubular shape, optionally with the first layer as an inner layer.

**28.** The process of claim 27 further comprising extruding an outer layer on a surface of the first or second layer, said outer layer optionally comprising a non-fluorinated polymer.

**29.** The process of claim 27 further comprising extruding an intermediate layer comprising a partially-fluorinated polymer onto the first layer, which comprises a perhalogenated polymer, and extruding an outer layer on a surface of the intermediate layer, said outer layer optionally comprising a non-fluorinated polymer.

**30.** The process of claim 27 wherein the extruding steps are performed via coextrusion.

## Patentansprüche

**1.** Gegenstand, umfassend:

eine erste Schicht, bestehend im Wesentlichen aus einem im Wesentlichen festen thermoplastischen perhalogenierten, gegebenenfalls perfluorierten, Polymer und gegebenenfalls einem oder mehreren Hilfsstoffen;
eine zweite Schicht, bestehend im Wesentlichen aus einem im Wesentlichen festen thermoplastischen teilweise fluorierten Polymer und gegebenenfalls einem oder mehreren Hilfsstoffen; und
eine Bindungsgrenzfläche zwischen der ersten Schicht und der zweiten Schicht, bestehend im Wesentlichen aus einem ersten Material mit der Zusammensetzung der ersten Schicht und einem zweiten Material mit der Zusammensetzung der zweiten Schicht.

**2.** Gegenstand nach Anspruch 1, wobei die erste und die zweite Schicht einen Haftungsgrad zwischen den Schichten von mindestens etwa einem Newton pro Zentimeter (N/cm), gegebenenfalls mindestens etwa 2 N/cm und gegebenenfalls mindestens etwa 5 N/cm aufweisen.

**3.** Gegenstand nach Anspruch 1, wobei das perhalogenierte Polymer eine erste Fläche aufweist, die an die zweite Schicht gebunden ist, wobei die erste Fläche eine Flächenenergie von weniger als etwa 25 $mJ/m^2$ aufweist.

**4.** Gegenstand nach Anspruch 1, wobei das perhalogenierte Polymer interpolymerisierte Einheiten der Formel I umfasst:

$$-CF(X)-CX_2-, \qquad (I)$$

wobei jedes X unabhängig ein Halogenatom, eine perhalogenierte $C_1$-$C_8$-Alkylgruppe, $R'_f$ oder $O(R'_fO)_aR'_f$ ist, wobei jedes $R'_f$ unabhängig eine $C_{1-}C_8$-Perfluoroalkylgruppe ist und a 0-10 ist.

**5.** Gegenstand nach Anspruch 4, wobei mindestens ein perhalogeniertes Polymer einen gewichtsprozentigen Anteil an seinen interpolymerisierten Einheiten der Formel I ausgewählt aus mindestens 40, mindestens 80 und mindestens 95 umfasst.

**6.** Gegenstand nach Anspruch 1, wobei das perhalogenierte Polymer ein perfluoriertes Polymer mit interpolymerisierten Einheiten gemäß Formel II umfasst:

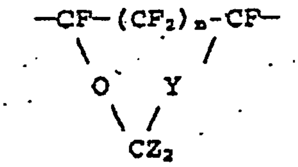 (II)

wobei jedes Y unabhängig eine Bindung, O oder $CF_2$ ist; jedes Z unabhängig F oder $R_f$ ist, wobei jedes $R_f$ unabhängig eine $C_1$-$C_{10}$-Perfluoroalkylgruppe ist; und n 0-3 ist.

**7.** Gegenstand nach Anspruch 1, wobei das perhalogenierte Polymer interpolymerisierte Einheiten gemäß der Formel $-CF_2-CF(X')-$ umfasst:
wobei jedes X' unabhängig Cl, Br, $R_f$, $O(R_fO)_aR_f$ ist, wobei jedes $R_f$ unabhängig eine $C_1$-$C_{10}$-Perfluoroalkylgruppe ist und a 0-10 ist, oder eine Einheit gemäß Formel II ist:

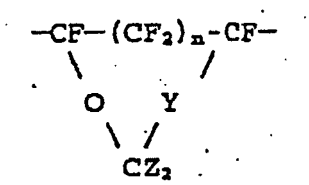 (II)

wobei jedes Y unabhängig eine Bindung, O oder $CF_2$ ist; jedes Z unabhängig F oder $R_f$ ist, wobei jedes $R_f$ unabhängig eine $C_1$-$C_{10}$-Perfluoroalkylgruppe ist; und n 0-3 ist.

**8.** Gegenstand nach Anspruch 6, wobei das perhalogenierte Polymer interpolymerisierte Einheiten gemäß der Formel $-CF_2-O-Y-CF_2-$, wobei Y eine Bindung oder $CF_2$ ist, umfasst.

**9.** Gegenstand nach Anspruch 1, wobei das perhalogenierte Polymer ein Copolymer aus Tetrafluoroethylen (TFE) mit mindestens einem der Folgenden umfasst: Hexafluoropropylen (HFP), Chlorotrifluoroethylen (CTFE) und ein perfluorierter Vinylether der Formel III:

$$CF_2{=}CFO(R_fO)_aR_f \qquad \text{(III)}$$

wobei jedes $R_f$ unabhängig eine lineare oder verzweigte $C_1$-$C_6$-Perfluoroalkylgruppe ist und a 0 oder eine ganze Zahl von 1 bis 20 ist.

**10.** Gegenstand nach Anspruch 1, wobei das perhalogenierte Polymer ein Polymer ausgewählt aus FEP, PFA, PCTFE, TFM, MFA und Teflon AF umfasst.

**11.** Gegenstand nach Anspruch 1, wobei die zweite Schicht ein teilweise fluoriertes Polymer mit interpolymerisierten Einheiten der Formel IV umfasst:

$$-CF(X')-CX'_2-, \qquad \text{(IV)}$$

wobei jedes X' unabhängig Wasserstoff, ein Halogenatom, eine $C_1$-$C_{10}$-Alkylgruppe, $R'_f$ oder $0(R'_fO)_aR'_f$ ist, wobei jedes $R'_f$ unabhängig eine $C_{1-}C_{10}$-Fluoroalkylgruppe ist und a 0-10 ist.

12. Gegenstand nach Anspruch 1, wobei die zweite Schicht Vinylfluorid, Vinylidenfluorid, Tetrafluoroethylen, Hexafluoropropylen, einen fluorierten Alkoxyvinylether, einen fluorierten Alkylvinylether und Kombinationen davon umfasst.

13. Gegenstand nach Anspruch 1, wobei die zweite Schicht interpolymerisierte Einheiten aus Vinylfluorid und/oder Vinylidenfluorid zusammen mit interpolymerisierten Einheiten aus einem Vinylether, HFP und/oder TFE umfasst.

14. Gegenstand nach Anspruch 1, wobei die zweite Schicht interpolymerisierte Einheiten aus VDF, HFP und TFE und gegebenenfalls einem fluorierten Vinylether umfasst.

15. Gegenstand nach Anspruch 1, ferner umfassend eine dritte Schicht und gegebenenfalls eine vierte Schicht, die an die dritte Schicht gebunden ist, wobei die dritte Schicht an die erste oder zweite Schicht gebunden ist, und wobei gegebenenfalls eine oder mehrere Schichten einen leitfähigen Hilfsstoff enthalten.

16. Gegenstand nach Anspruch 15, wobei die dritte Schicht und/oder die vierte Schicht ein Polymer umfassen, ausgewählt aus: perhalogenierten Polymeren, Perfluoropolymeren, teilweise fluorierten Polymeren und nicht fluorierten Polymeren und Kombinationen davon.

17. Blatt, umfassend:

eine erste Schicht, umfassend ein perhalogeniertes thermoplastisches Polymer und gegebenenfalls einen oder mehrere Hilfsstoffe;
eine zweite Schicht, umfassend ein teilweise fluoriertes thermoplastisches Polymer und gegebenenfalls einen oder mehrere Hilfsstoffe; und
eine Bindungsgrenzfläche zwischen der ersten Schicht und der zweiten Schicht, bestehend im Wesentlichen aus einem ersten Material mit der Zusammensetzung der ersten Schicht und einem zweiten Material mit der Zusammensetzung der zweiten Schicht.

18. Blatt nach Anspruch 17, wobei das perhalogenierte Polymer aus interpolymerisierten Einheiten aus TFE, HFP und CTFE und gegebenenfalls einem perfluorierten Vinylether abgeleitet ist.

19. Blatt nach Anspruch 17, wobei das teilweise fluorierte Polymer aus interpolymerisierten Einheiten aus einem oder mehreren der Folgenden abgeleitet ist: Vinylfluorid, VDF, TFE, HFP, CTFE, einem fluorierten Alkoxyvinylether und einem fluorierten Alkylvinylether.

20. Solarzelle, umfassend eine Folie, umfassend den Gegenstand nach einem der vorstehenden Ansprüche, und gegebenenfalls ferner umfassend eine weitere Schicht, die ein nicht fluoriertes Polymer umfassen kann, wobei das nicht fluorierte Polymer gegebenenfalls ausgewählt ist aus Polyestern, Polyacrylaten, Polymethacrylaten, Polyolefinen.

21. Kraftstoffschlauch, umfassend den Gegenstand nach einem der Ansprüche 1-15.

22. Kraftstoffschlauch nach Anspruch 21, ferner umfassend eine Außenschicht, wobei die Außenschicht gegebenenfalls ein nicht fluoriertes Polymer umfasst.

23. Kraftstoffschlauch nach Anspruch 22, ferner umfassend:

eine Zwischenschicht, umfassend ein teilweise fluoriertes thermoplastisches Polymer, die an die erste Schicht des Gegenstands gebunden ist;
eine Innenschicht, die an die zweite Schicht des Gegenstands gebunden ist, wobei die Innenschicht gegebenenfalls ein teilweise fluoriertes Elastomer umfasst; und
wobei eine oder mehrere Schichten ein leitfähiges Material enthalten.

24. Kraftstoffschlauch nach Anspruch 22, wobei die Außenschicht ein Material umfasst, ausgewählt aus Polyamiden, Polyimiden, Polyurethanen, Polyolefinen, Polystyrolen, Polyestern, Polycarbonaten, Polyketonen, Polyharnstoffen, Polyacrylaten, Polymethacrylaten, Acrylonitril-Butadien, Butadien-Kautschuk, chloriertem und chlorsulfoniertem Polyethylen, Chloropren, EPM, EPDM, PE-EPDM, PP-EPDM, EVOH, Epichlorhydrin, Isobutylenisopren, Isopren, Polysulfiden, Silikonen, NBR/PVC, Styrol-Butadienen und Vinylacetatethylenen und Kombinationen davon.

**25.** Verfahren zur Herstellung eines Schichtgegenstands, umfassend:

a) Bereitstellen einer ersten Schicht und einer zweiten Schicht nach einem der Ansprüche 1-15;
b) Erwärmen mindestens einer Schicht auf eine Temperatur oberhalb des Erweichungspunktes oder des Schmelzpunktes über einen Zeitraum, der zum Binden der Schichten ausreicht; und
c) gegebenenfalls Pressen der ersten Schicht auf die zweite Schicht und

wobei eine Bindungsgrenzfläche zwischen der ersten Schicht und der zweiten Schicht im Wesentlichen aus einem ersten Material mit der Zusammensetzung der ersten Schicht und einem zweiten Material mit der Zusammensetzung der zweiten Schicht besteht.

**26.** Verfahren zur Herstellung eines Schichtgegenstands, umfassend die Herstellung eines zweischichtigen Unteraggregats, bestehend im Wesentlichen aus:

a) Extrudieren einer ersten Schicht nach einem der Ansprüche 1-15 und
b) Extrudieren einer zweiten Schicht nach einem der Ansprüche 1-15 und Kontaktieren einer Fläche der ersten Schicht,

wobei eine Bindungsgrenzfläche zwischen der ersten Schicht und der zweiten Schicht im Wesentlichen aus einem ersten Material mit der Zusammensetzung der ersten Schicht und einem zweiten Material mit der Zusammensetzung der zweiten Schicht besteht,
wobei gegebenenfalls die erste Schicht und die zweite Schicht gebunden werden, während mindestens eine Schicht oberhalb ihres Schmelzpunktes oder ihres Erweichungspunktes ist,
und wobei gegebenenfalls eine oder mehrere Schichten ferner ein leitfähiges Material umfassen.

**27.** Verfahren nach Anspruch 26, wobei die erste Schicht und die zweite Schicht zu einer Schlauchform extrudiert werden, wobei die erste Schicht gegebenenfalls eine Innenschicht darstellt.

**28.** Verfahren nach Anspruch 27, ferner umfassend das Extrudieren einer Außenschicht auf eine Fläche der ersten oder zweiten Schicht, wobei die Außenschicht gegebenenfalls ein nicht fluoriertes Polymer umfasst.

**29.** Verfahren nach Anspruch 27, ferner umfassend das Extrudieren einer Zwischenschicht, die ein teilweise fluoriertes Polymer umfasst, auf die erste Schicht, die ein perhalogeniertes Polymer umfasst; und Extrudieren einer Außenschicht auf eine Fläche der Zwischenschicht, wobei die Außenschicht gegebenenfalls ein nicht fluoriertes Polymer umfasst.

**30.** Verfahren nach Anspruch 27, wobei die Extrudierschritte mittels Koextrusion durchgeführt werden.

## Revendications

**1.** Article comprenant :

une première couche constituée essentiellement d'un polymère thermoplastique fondamentalement solide perhalogéné, éventuellement perfluoré, et éventuellement d'un ou plusieurs adjuvants ;
une deuxième couche constituée essentiellement d'un polymère thermoplastique fondamentalement solide partiellement fluoré, et éventuellement d'un ou plusieurs adjuvants ; et
une interface de liaison entre ladite première couche et ladite deuxième couche, constituée essentiellement d'un premier matériau ayant la composition de ladite première couche et d'un deuxième matériau ayant la composition de ladite deuxième couche.

**2.** Article selon la revendication 1, dans lequel les première et deuxième couches ont un niveau d'adhérence intercouche d'au moins environ 1 Newton par centimètre (N/cm), éventuellement d'au moins environ 2 N/cm, et éventuellement d'au moins environ 5 N/cm.

**3.** Article selon la revendication 1, dans lequel le polymère perhalogéné comporte une première surface liée à la deuxième couche, dans lequel ladite première surface a une énergie superficielle inférieure à environ 25 $mJ/m^2$.

**4.** Article selon la revendication 1, dans lequel le polymère perhalogéné comprend des unités interpolymérisées de formule I :

$$-CF(X)-CX_2-, \qquad (I)$$

dans laquelle chaque X est indépendamment un atome d'halogène, un groupe alkyle perhalogéné en $C_1$-$C_8$, $R'_f$, ou $O(R'_fO)_aR'_f$, dans laquelle chaque $R'_f$ est indépendamment un groupe perfluoroalkyle en $C_1$-$C_8$ et a vaut 0-10.

**5.** Article selon la revendication 4, dans lequel au moins un polymère perhalogéné comprend un niveau exprimé en pourcentage pondéral de ses unités interpolymérisées de formule I qui est sélectionné parmi au moins 40, au moins 80, et au moins 95.

**6.** Article selon la revendication 1, dans lequel le polymère perhalogéné comprend un polymère perfluoré comportant des unités interpolymérisées selon la formule II :

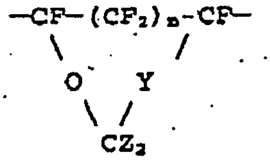

(II)

dans laquelle chaque Y est indépendamment une liaison, O, ou $CF_2$ ; chaque Z est indépendamment F ou $R_f$ dans laquelle chaque $R_f$ est indépendamment un groupe perfluoroalkyle en $C_1$-$C_{10}$ ; et n vaut 0-3.

**7.** Article selon la revendication 1, dans lequel le polymère perhalogéné comprend des unités interpolymérisées selon la formule $-CF_2-CF(X')-$,
dans laquelle chaque X' est indépendamment Cl, Br, $R_f$, $O(R_fO)_aR_f$, dans laquelle chaque $R_f$ est indépendamment un groupe perfluoroalkyle en $C_1$-$C_{10}$ et a vaut 0-10, ou une unité selon la formule II :

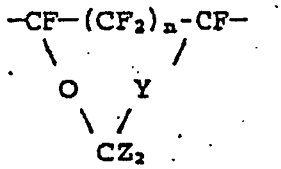

(II)

dans laquelle chaque Y est indépendamment une liaison, O, ou $CF_2$ ; chaque Z est indépendamment F ou $R_f$ dans laquelle chaque $R_f$ est indépendamment un groupe perfluoroalkyle en $C_1$-$C_{10}$ ; et n vaut 0-3.

**8.** Article selon la revendication 6, dans lequel le polymère perhalogéné comprend des unités interpolymérisées selon la formule $-CF_2-O-Y-CF_2-$, dans laquelle Y est une liaison ou $CF_2$.

**9.** Article selon la revendication 1, dans lequel le polymère perhalogéné comprend un copolymère de tétrafluoroéthylène (TFE) avec l'un au moins de l'hexafluoropropylène (HFP), du chlorotrifluoroéthylène (CTFE), et d'un éther vinylique perfluoré de formule III :

$$CF_2{=}CFO(R_fO)_aR_f \qquad (III)$$

dans laquelle chaque $R_f$ est indépendamment un groupe perfluoroalkyle linéaire ou ramifié en $C_1$-$C_6$ ; et a est 0 ou un nombre entier de 1 à 20.

**10.** Article selon la revendication 1, dans lequel le polymère perhalogéné comprend un polymère sélectionné parmi le FEP, le PFA, le PCTFE, le TFM, le MFA, et le téflon AF.

**11.** Article selon la revendication 1, dans lequel la deuxième couche comprend un polymère partiellement fluoré comportant des unités interpolymérisées de formule IV :

$$-CF(X')-CX'_2-, \qquad (IV)$$

dans laquelle chaque X' est indépendamment l'hydrogène, un atome d'halogène, un groupe alkyle en $C_1$-$C_{10}$, $R'_f$, ou $O(R'_fO)_aR'_f$, dans laquelle chaque $R'_f$ est indépendamment un groupe fluoroalkyle en $C_1$-$C_{10}$ et a vaut 0-10.

**12.** Article selon la revendication 1, dans lequel la deuxième couche comprend le fluorure de vinyle, le fluorure de vinylidène, le tétrafluoroéthylène, l'hexafluoropropylène, un éther alcoxyvinylique fluoré, un éther alkylvinylique fluoré, et des combinaisons de ceux-ci.

**13.** Article selon la revendication 1, dans lequel la deuxième couche comprend des unités interpolymérisées de fluorure de vinyle et/ou de fluorure de vinylidène conjointement avec des unités interpolymérisées d'un éther vinylique, de HFP, et/ou de TFE.

**14.** Article selon la revendication 1, dans lequel la deuxième couche comprend des unités interpolymérisées de VDF, de HFP, et de TFE, et éventuellement un éther vinylique fluoré.

**15.** Article selon la revendication 1, comprenant en outre une troisième couche, et éventuellement une quatrième couche liée à la troisième couche, dans lequel la troisième couche est liée à la première ou à la deuxième couche, et éventuellement dans lequel une ou plusieurs couches comprennent un adjuvant conducteur.

**16.** Article selon la revendication 15, dans lequel la troisième couche et/ou la quatrième couche comprend/comprennent un polymère sélectionné parmi des polymères perhalogénés, des perfluoropolymères, des polymères partiellement fluorés, et des polymères non fluorés, et des combinaisons de ceux-ci.

**17.** Feuille comprenant :

une première couche comprenant un polymère thermoplastique perhalogéné et éventuellement un ou plusieurs adjuvants ;
une deuxième couche comprenant un polymère thermoplastique partiellement fluoré et éventuellement un ou plusieurs adjuvants ; et
une interface de liaison entre ladite première couche et ladite deuxième couche, constituée essentiellement d'un premier matériau ayant la composition de ladite première couche et d'un deuxième matériau ayant la composition de ladite deuxième couche.

**18.** Feuille selon la revendication 17, dans laquelle le polymère perhalogéné est dérivé d'unités interpolymérisées de TFE, de HFP, de CTFE, et éventuellement d'un éther vinylique perfluoré.

**19.** Feuille selon la revendication 17, dans laquelle le polymère partiellement fluoré est dérivé d'unités interpolymérisées d'un ou plusieurs du fluorure de vinyle, du VDF, du TFE, du HFP, du CTFE, d'un éther alcoxyvinylique fluoré, et d'un éther alkylvinylique fluoré.

**20.** Pile solaire comprenant un film comprenant l'article selon l'une quelconque des revendications précédentes, et éventuellement, comprenant en outre une autre couche qui peut comprendre un polymère non fluoré, éventuellement dans laquelle le polymère non fluoré est sélectionné parmi des polyesters, des polyacrylates, des polyméthacrylates, des polyoléfines.

**21.** Tuyau de carburant comprenant l'article selon l'une quelconque des revendications 1 à 15.

**22.** Tuyau de carburant selon la revendication 21, comprenant en outre une couche externe, ladite couche externe comprenant éventuellement un polymère non fluoré.

**23.** Tuyau de carburant selon la revendication 22, comprenant en outre :

une couche intermédiaire comprenant un polymère thermoplastique partiellement fluoré lié à la première couche de l'article ;
une couche interne liée à la deuxième couche de l'article, la couche interne comprenant éventuellement un élastomère partiellement fluoré ; et

dans lequel une ou plusieurs couches contiennent un matériau conducteur.

**24.** Tuyau de carburant selon la revendication 22, dans lequel la couche externe comprend un matériau sélectionné parmi des polyamides, des polyimides, des polyuréthanes, des polyoléfines, des polystyrènes, des polyesters, des polycarbonates, des polycétones, des polyurées, des polyacrylates, des polyméthacrylates, l'acrylonitrile-butadiène, le caoutchouc butadiène, le polyéthylène chloré et chloro-sulfoné, le chloroprène, l'EPM, l'EPDM, le PE-EPDM, le PP-EPDM, l'EVOH, l'épichlorhydrine, l'isobutylène-isoprène, l'isoprène, des polysulfides, des silicones, le NBR/PVC, des composés de styrène-butadiène et des composés d'éthylène-acétate de vinyle, et des combinaisons de ceux-ci.

**25.** Procédé de préparation d'un article stratifié, comprenant :

a) la fourniture d'une première couche et d'une deuxième couche selon l'une quelconque des revendications 1 à 15 ;
b) le chauffage d'au moins une couche à une température supérieure à son point de ramollissement ou point de fusion pendant suffisamment de temps pour lier les couches ; et
c) éventuellement, la pression de ladite première couche contre ladite deuxième couche, et

dans lequel une interface de liaison entre ladite première couche et ladite deuxième couche est constituée essentiellement d'un premier matériau ayant la composition de ladite première couche et d'un deuxième matériau ayant la composition de ladite deuxième couche.

**26.** Procédé de fabrication d'un article stratifié comprenant la préparation d'un sous-assemblage constitué de deux couches, consistant essentiellement à :

a) extruder une première couche selon l'une quelconque des revendications 1 à 15 ; et
b) extruder une deuxième couche selon l'une quelconque des revendications 1 à 15 et la mettre en contact avec une surface de la première couche,

dans lequel une interface de liaison entre ladite première couche et ladite deuxième couche est constituée essentiellement d'un premier matériau ayant la composition de ladite première couche et d'un deuxième matériau ayant la composition de ladite deuxième couche,
éventuellement dans lequel ladite première couche et ladite deuxième couche sont liées tandis qu'au moins une couche est à une température supérieure à son point de fusion ou point de ramollissement,
et éventuellement dans lequel une ou plusieurs couches comprennent en outre un matériau conducteur.

**27.** Procédé selon la revendication 26, dans lequel ladite première couche et ladite deuxième couche sont extrudées de façon à produire une forme tubulaire, éventuellement avec la première couche comme couche interne.

**28.** Procédé selon la revendication 27, comprenant en outre l'extrusion d'une couche externe sur une surface de la première ou de la deuxième couche, ladite couche externe comprenant éventuellement un polymère non fluoré.

**29.** Procédé selon la revendication 27, comprenant en outre l'extrusion d'une couche intermédiaire comprenant un polymère partiellement fluoré sur la première couche, qui comprend un polymère perhalogéné, et l'extrusion d'une couche externe sur une surface de la couche intermédiaire, ladite couche externe comprenant éventuellement un polymère non fluoré.

**30.** Procédé selon la revendication 27, dans lequel les étapes d'extrusion sont exécutées par coextrusion.